# EUROPEAN PATENT APPLICATION

(11) **EP 4 796 765 A1**
(43) Date of publication of application: **26.08.2026**
(21) Application number: 25160058.1
(22) Date of filing: 25.02.2025
(51) Int. Cl.: F01N 3/021, F01N 3/10, F01N 3/20, F01N 3/28, F01N 9/00, F01N 13/00

(54) **AN EXHAUST AFTERTREATMENT SYSTEM, AN ENGINE SYSTEM, AND METHODS FOR CONTROLLING OPERATION THEREOF**

(71) Applicant: Volvo Truck Corporation, 405 08 Göteborg (SE)
(72) Inventor: ANDERSSON, Lennart, 432 99 SKÄLLINGE (SE); SRINIVASAN, Shankar, 560035 BANGALORE SOUTH (IN)
(74) Representative: Kransell & Wennborg KB

(57) **Abstract**

An engine system (10) and an exhaust aftertreatment system (20) arranged in an exhaust flow path (26) of a hydrogen combustion engine (15), comprising:
a selective catalytic reduction device (40) configured to reduce nitrogen oxides;
a hydrogen and ammonia slip catalyst device (50) arranged downstream of the SCR device (40) in the exhaust flow path (26), the HASC device (50) comprising an oxidation catalyst coating (52) and a metal-zeolite coating (53), a loading of the metal-zeolite coating (53) decreasing along a direction of flow (D); and
a particulate filter (60) arranged downstream of the HASC device.

In response to determining that the temperature of the HASC device is below a threshold, the engine system (10) is operated with a relatively high percentage of water in the engine out exhaust gases, whereby water is adsorbed on the metal-zeolite coating and a quick temperature rise is achieved.

## Description

### TECHNICAL FIELD

The disclosure relates generally to engine exhaust aftertreatment of hydrogen combustion engine exhausts. In particular aspects, the disclosure relates to an exhaust aftertreatment system, an engine system, methods for controlling operation of an engine system, a computer system, and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Hydrogen combustion engines using a hydrogen-based fuel, such as hydrogen gas H₂, have become increasingly interesting as power sources in heavy-duty vehicles to comply with emission regulations in various jurisdictions. The combustion of hydrogen gas with oxygen produces, theoretically, only water as biproduct. However, even though the engine is subject to adaptations to operate on hydrogen-based fuel, nitrogen oxide (NOx) formation during the combustion process is difficult to avoid, requiring treatment of the engine exhausts. NOx emissions arising in the first few minutes of a cold start drive cycle may typically account for a major portion of the emissions from the entire drive cycle. Hence, to reduce NOx emissions, it is desirable to heat up the EATS as quickly and efficiently as possible.

### SUMMARY

According to a first aspect of the disclosure, an exhaust aftertreatment system (EATS) arranged in an exhaust flow path of a hydrogen combustion engine is provided. The EATS comprises a selective catalytic reduction (SCR) device configured to reduce nitrogen oxides; a hydrogen and ammonia slip catalyst (HASC) device arranged downstream of the SCR device in the exhaust flow path, the HASC device comprising an oxidation catalyst coating and a metal-zeolite coating provided on a substrate, wherein a loading of the metal-zeolite coating decreases along a direction of flow within the exhaust flow path; and a particulate filter arranged downstream of the HASC device in the exhaust flow path.

The first aspect of the disclosure may seek to provide an in at least some aspect improved exhaust aftertreatment system, EATS, for a hydrogen combustion engine. In particular, it may seek to provide an EATS that may reduce cold start emissions from the engine without significant penalty on fuel consumption.

During a cold start of the engine, the metal-zeolite coating of the HASC device will adsorb water from the exhaust gases. Thanks to the relatively larger loading of the metal-zeolite coating within a first portion of the HASC device as seen in the direction of flow, more water will be adsorbed in the first portion of the HASC device than in a second, downstream portion. The water adsorption within in particular the first portion of the HASC device will in turn result in a temperature increase of the HASC device due to the release of exothermic energy. A temperature sufficient for NOx conversion will hence be reached faster. The particulate filter arranged downstream of the HASC device prevents moisture from the ambient air from reaching the HASC device during engine downtime, and hence keeps the HASC device dry such that it may efficiently adsorb water during the engine start-up. Similarly, the SCR device arranged upstream of the HASC device protects the HASC device from exposure to moist exhausts left in the EATS at engine shutdown.

Hence, a technical benefit may include that an electrical heater or similar to raise the temperature within the EATS is not required. This may reduce fuel consumption at the same time as it reduces the complexity of the EATS.

By a metal-zeolite is intended a metal ion-exchanged zeolite, comprising a transition metal such as copper (Cu) or iron (Fe). The metal may further be one of Co, Ni, Ag, V, Rh, Pd, Pt, or Ir. The metal-zeolite is a microporous and crystalline aluminosilicate with a spatial network structure of the general formula: 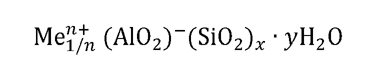 where ${Me}_{1 / n}^{n +}$ is a metal ion. In some embodiments, the metal-zeolite may further contain a small fraction of a third oxide. The metal-zeolite coating will, in addition to adsorbing water during engine start-up, contribute to NOx reduction with ammonia (NH3) under certain operating conditions. The loading of the metal-zeolite coating may be expressed in terms of its water adsorbing capacity per unit mass of the HASC device, and/or in weight by substrate weight or weight by thermal mass The substrate may be a monolithic cordierite substrate or similar.

The particulate filter may preferably comprise a water adsorbent configured to adsorb moisture, to further improve the prevention of moisture from reaching the HASC device during engine downtime. For example, the particulate filter may comprise a water absorbing coating, such as a metal-zeolite coating, covering at least a portion of the particulate filter. A coverage of the water adsorbing coating may be significantly smaller than that of the HASC device.

Optionally in some examples, including in at least one preferred example, the metal-zeolite coating is configured to provide an average water adsorption capacity of 50 to 60 g of water per kg of the HASC device mass. The water adsorption capacity is herein determined at a temperature of 180°C, with an exhaust stream containing 10 mol% (mole percent) of water or more. This is the minimum quantity of water to be adsorbed and retained up to at least a temperature of 180°C. A technical benefit may include a quick temperature rise within the HASC device thanks to water adsorption upon a cold start of the engine.

Optionally in some examples, including in at least one preferred example, an amount of metal-zeolite in the HASC device is sufficient to adsorb an amount of water leading to a temperature increase to a light-off temperature for H2 oxidation within the HASC device during engine start-up. A technical benefit may include sufficient heating to ensure efficient NOx oxidation at the HASC device using hydrogen gas (H2) as a reductant. This may reduce emissions during cold starts.

Optionally in some examples, including in at least one preferred example, the metal-zeolite coating within a first half of the HASC device is configured to provide a total water adsorption capacity within the first half of the HASC device which is at least 1.5 times a total water adsorption capacity within the second half of the HASC device, preferably at least 1.7 times, more preferably at least 1.8 times, such as twice or approximately twice the water adsorption capacity within the second half of the HASC device. A technical benefit may include a higher water adsorption capacity in an upstream first portion of the HASC device than in a downstream second portion thereof, hence promoting a quick temperature rise within the first portion of the HASC device. The loading of the metal-zeolite coating may be reduced stepwise along the direction of flow, or gradually. The HASC device may be divided into several portions in the direction of flow, each portion having a lower loading of the metal-zeolite coating than the preceding portion.

Optionally in some examples, including in at least one preferred example, the metal-zeolite coating is arranged on top of the oxidation catalyst coating on the substrate. A technical benefit may include enhanced water adsorption.

Optionally in some examples, including in at least one preferred example, a loading of the oxidation catalyst coating within the HASC device is increasing along a direction of flow within the exhaust flow path. The loading of the oxidation catalyst may be expressed in weight per substrate volume or weight per substrate surface area. The increase may be gradual, or stepwise, along the direction of flow. An effective NOx reduction by selective catalytic reaction with H2, also referred to as H2-SCR, may hence be ensured at a downstream end of the HASC device as well as selective ammonia conversion and oxidation of residual H2. A technical benefit may include improved catalytic efficiency by ensuring a higher oxidation capacity where it is most needed, thereby reducing ammonia and hydrogen slip. Furthermore, a controlled H2 reaction pathway may be achieved as well as a balance between H2 combustion and H2-SCR reactions.

Optionally in some examples, including in at least one preferred example, a first half of the HASC device contains a first amount of the oxidation catalyst coating and a second half of the HASC device, downstream of the first half, contains a second amount of the oxidation catalyst coating, the first amount being 25-75% of the second amount, preferably 40-60%. A technical benefit may include reduced H2 consumption and improved NOx conversion.

Optionally in some examples, including in at least one preferred example, the HASC device is divided into three or more portions along the direction of flow, such as four or five portions, each portion containing a higher amount of the oxidation catalyst coating than the preceding portion. Hence, a finer control and a better synergy between H2O adsorption, H2 oxidation and H2-SCR reactions may be achieved. Each portion may further contain a lower loading of the metal-zeolite coating than the preceding portion.

Optionally in some examples, including in at least one preferred example, the exhaust aftertreatment system further comprises a hydrogen injector configured to inject H2 into the exhaust flow path, the hydrogen injector being arranged upstream of the HASC device. By injecting hydrogen into the exhaust flow path upstream of the HASC device, H2 oxidation may take place on the oxidation catalyst coating of the HASC device. Since this is an exothermic reaction, it further raises the temperature of the HASC device and contributes to a more efficient reduction of NOx, using unreacted hydrogen gas, before the SCR device has reached working temperature.

According to a second aspect of the disclosure, an engine system for a vehicle is provided. It comprises a hydrogen combustion engine and an exhaust aftertreatment system of the first aspect arranged in an exhaust flow path of the engine. The EATS is thereby arranged to reduce emissions originating from the engine. The hydrogen combustion engine may be configured to use hydrogen gas and/or another hydrogen-based fuel, such as a mixture of H2 with natural gas and/or with biogas.

According to a third aspect of the disclosure, a computer-implemented method for controlling operation of the engine system of the second aspect in connection with starting of the engine is provided. The method comprises:
determining, by processing circuitry of a computer system, a temperature of the HASC device;
in response to determining that the temperature of the HASC device is below a first HASC temperature range, instructing, by the processing device, the engine system to operate in a first operating mode defined by an amount of water in the engine out exhaust gases being at least 10 mol%, preferably at least 12 mol%, during which water is adsorbed on the metal-zeolite coating of the HASC device; and
in response to determining that the temperature of the HASC device is within the first HASC temperature range and has not yet reached an upper endpoint thereof, instructing, by the processing circuitry, the engine system to operate in a second operating mode defined by an amount of unburnt hydrogen in the exhaust gases at an inlet of the HASC device being at least 0.3 mol%.

The third aspect of the disclosure may seek to provide an in at least some aspect improved method of operating the engine system in connection with starting of the engine, and in particular in connection with cold starting thereof. A technical benefit may include reduced cold-start emissions thanks to a quick heating of the HASC device, enabling it to be used for NOx reduction before the SCR device has reached its working temperature. The quick heating primarily arises thanks to the water adsorption taking place during the operation of the engine system in the first operating mode. When operated in the second operating mode, the amount of unburnt hydrogen, H2, in the exhaust gases is relatively large and unburnt H2 may thereby be used as a reductant for NOx conversion within the HASC device, reducing NOx during the cold start.

In the first operating mode, the amount of water within the exhaust gases should preferably not exceed 25 mol%.

In the second operating mode, the amount of unburnt hydrogen in the exhaust gases at an inlet of the HASC device may preferably be at least 0.5 mol%, or more preferably at least 0.8 mol%. The amount of unburnt hydrogen may preferably be less than 3 mol%, such less than 2 mol%. The amount of unburnt hydrogen may, in at least one preferred example, be 1 mol% or about 1 mol%.

Optionally in some examples, including in at least one preferred example, the determined temperature of the HASC device corresponds to the temperature at an outlet of the HASC device, and the first HASC temperature range has a lower endpoint below 100°C, such as in the range of 70-90°C. When the temperature at the outlet has reached the lower endpoint, it has typically reached the light-off temperature for H2 oxidation, about 120°C, in the first half of the HASC device, and it is suitable to activate the second operating mode in which more hydrogen is present in the exhaust gases and may be used for NOx conversion.

Optionally in some examples, including in at least one preferred example, the determined temperature of the HASC device corresponds to the temperature at an outlet of the HASC device, and the first HASC temperature range has an upper endpoint of 180-220°C, preferably 190-210°C. When the temperature at the outlet has reached the upper endpoint, the EATS is sufficiently warm to fully activate the SCR device. The temperature at the outlet of the HASC device may thereafter temporarily fall as the second operating mode is ended, such as by stopping any additional injection of H2. The engine system may thereafter be instructed to operate in a default operating mode.

Optionally in some examples, including in at least one preferred example, the instructing of the engine system to operate in the second operating mode comprises instructing at least one fuel injector of the engine to inject H2 into at least one engine cylinder during an exhaust stroke, and/or instructing an H2 injector to inject H2 into the exhaust flow path at a location between an engine exhaust valve and the HASC device. A technical benefit may include precise control over hydrogen availability for oxidation, improving the efficiency of the aftertreatment system while reducing ammonia and hydrogen slip.

According to a fourth aspect, a computer-implemented method for controlling operation of the engine system in connection with shutdown of the engine is provided. The method comprises:
in response to receiving, by processing circuitry of a computer system, a signal indicating shutdown of the engine, instructing, by the processing circuitry, the engine system to operate in an idle mode with a lambda value of at least 3.5 until an end condition is fulfilled.

By controlling the operation of the engine system in accordance with the fourth aspect, low humidity within the EATS may be ensured. This in turn will ensure that sufficient water adsorption to quickly raise the temperature at engine start-up may be achieved.

The end condition may be considered fulfilled after a predetermined time, or after a predetermined number of cycles, or when a humidity of the exhaust gases is lower than a threshold.

Optionally in some examples, including in at least one preferred example, operation in the idle mode comprises fuel cut-off to at least some of the cylinders, such as to half of the cylinders. A technical benefit may include realizing high lambda levels, for e.g. 7 or higher.

According to a fifth aspect, a computer system for controlling operation of the engine system of the second aspect in connection with starting of the engine is provided. The computer system comprises processing circuitry configured to:
determine a temperature of the HASC device;
in response to determining that the temperature of the HASC device is below a first HASC temperature range, instruct the engine system to operate in a first operating mode defined by an amount of water in the engine out exhaust gases being at least 10 mol%, preferably at least 12 mol%, during which water is adsorbed on the metal-zeolite coating of the HASC device; and
in response to determining that the temperature of the HASC device is within the first HASC temperature range, instruct the engine system to operate in a second operating mode defined by an amount of unburnt hydrogen in the exhaust gases at an inlet of the HASC device being at least 0.3 mol%, preferably be at least 0.5 mol%, or more preferably at least 0.8 mol%.

Optionally in some examples, including in at least one preferred example, the determined temperature of the HASC device corresponds to the temperature at an outlet of the HASC device, and the first HASC temperature range has a lower endpoint below 100°C, such as in the range of 70-90°C.

Optionally in some examples, including in at least one preferred example, the determined temperature of the HASC device corresponds to the temperature at an outlet of the HASC device, and the first HASC temperature range has an upper endpoint of 180-220°C, preferably 190-210°C.

Optionally in some examples, including in at least one preferred example, the processing circuitry is configured to instruct the engine system to operate in a hydrogen exhaust excess mode by instructing at least one fuel injector of the engine to inject H2 into at least one engine cylinder during an exhaust stroke, and/or instructing an H2 injector to inject H2 into the exhaust flow path at a location between an engine exhaust valve and the HASC device.

The computer system may further be configured for controlling operation of the engine system in connection with shutdown of the engine. The processing circuitry may be configured to:
in response to receiving a signal indicating shutdown of the engine, instruct the engine system to operate in an idle mode with a lambda value of at least 3.5 until an end condition is fulfilled.

The engine system according to the second aspect may comprise the computer system according to the fifth aspect.

According to a sixth aspect, a vehicle comprising the engine system of the second aspect is provided. The vehicle may also comprise the computer system of the fifth aspect. The vehicle may preferably be a heavy-duty vehicle such as a bus or a truck.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings. The drawings are schematic and are not drawn to scale.
**FIG. 1** is an exemplary vehicle according to an example.
**FIG. 2** is an exemplary engine system according to an example.
**FIG. 3** is an exemplary engine cylinder according to an example.
**FIG. 4** is a portion of an exemplary HASC according to an example.
**FIG.** 5 is a flow chart illustrating an exemplary method of controlling operation of an engine system according to an example.
**FIG. 6** is a schematic diagram of an exemplary computer system for implementing examples disclosed herein, according to an example.
**FIG. 7** is a graph illustrating temperature development within a HASC device during engine startup.

### DETAILED DESCRIPTION

The detailed description set forth below provides information and examples of the disclosed technology with sufficient detail to enable those skilled in the art to practice the disclosure.

Hydrogen combustion engines use a hydrogen-based fuel, such as hydrogen gas H₂, or H₂ mixed with natural gas and/or biogas. The combustion of H₂ with oxygen produces, theoretically, only water as biproduct. However, even though the engine is subject to adaptations to operate on hydrogen-based fuel, NOx formation during the combustion process is difficult to avoid and treatment of the engine exhausts is therefore necessary. An exhaust aftertreatment system, EATS, is therefore provided. The EATS typically includes a selective catalytic reduction, SCR, device, into which a reductant such as urea or ammonia, is added to reduce NOx. However, the NOx reduction reactions in the SCR device cannot take place at low temperatures, such as during cold starts. NOx emissions arising in the first few minutes of a cold start drive cycle of the engine may therefore typically account for a major portion of the emissions from the entire drive cycle. A hydrogen and ammonia slip catalyst, HASC, device may be provided that is functional at lower temperatures than the SCR device and that reduces some of the produced NOx.

Hence, to reduce NOx emissions, it is desirable to heat up the EATS as quickly and efficiently as possible in connection with a cold start of the engine.

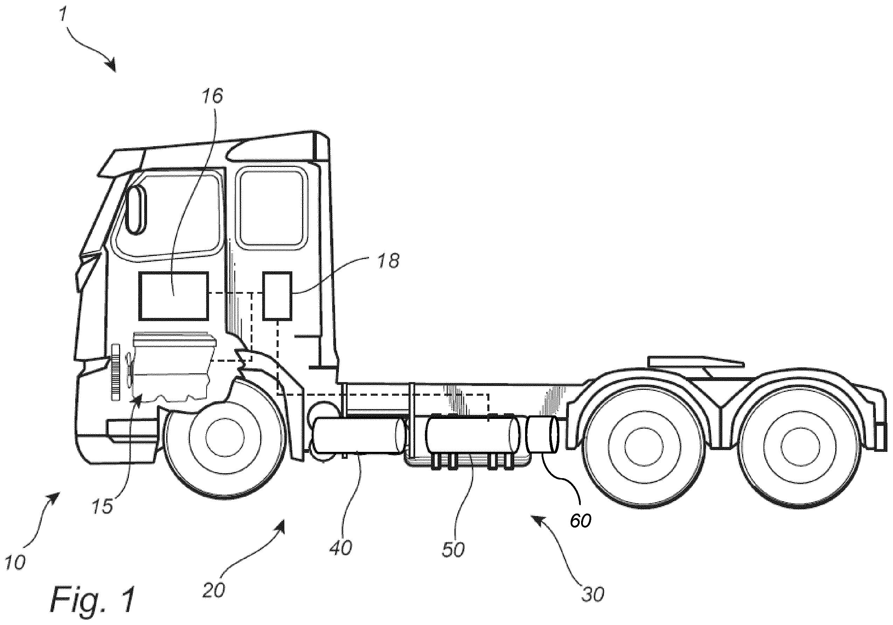

**FIG. 1** is an exemplary vehicle 1 according to an example. The vehicle 1, here embodied as a heavy-duty truck, comprises a hydrogen combustion engine system 10 of a kind disclosed in the present disclosure. However, the hydrogen combustion engine system 10 may as well be implemented in other types of vehicles, such as in busses, light-weight trucks, passenger cars, marine applications etc. The hydrogen combustion engine system 10 of the vehicle 1 illustrated in Fig. 1 comprises a hydrogen combustion engine 15 and an exhaust aftertreatment system, EATS, 20 configured to reduce emissions of the engine exhausts from the hydrogen combustion engine 15. However, the vehicle may according to at least one example embodiment be a hybrid vehicle further comprising an (optional) electric machine 16, and optionally also a fuel cell. The hydrogen combustion engine 15 is powered by hydrogen fuel (also referred to as H2 fuel), typically comprised in a fuel tank (also referred to as H2 storage tank). The hydrogen combustion engine 15 is preferably configured to be operated by an Otto cycle, or another four stroke cycle. The operation of the hydrogen combustion engine system 10 may e.g. be controlled by a control unit 18.

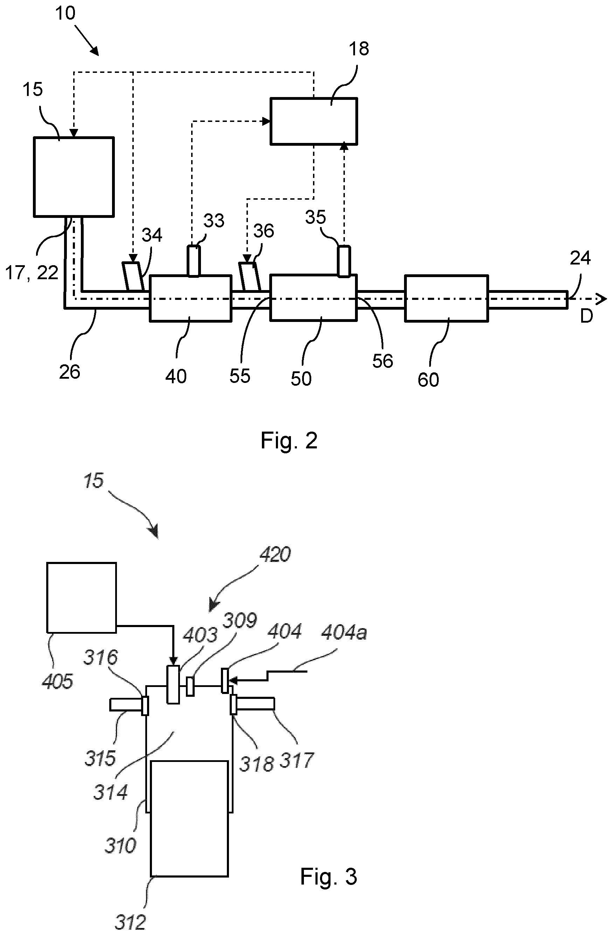

The EATS 20 comprises a plurality of emission reducing modules 30 arranged downstream of an exhaust gas inlet (shown in Fig. 2) of the EATS 20. The emission reducing modules 30 are configured to reduce emissions of the engine exhausts. The plurality of emission reducing modules 30 comprises at least a selective catalyst reduction, SCR, device 40, a hydrogen and ammonia slip catalyst, HASC, device 50, and a particulate filter 60. The SCR device 40 is arranged upstream of the HASC device 50, in turn arranged upstream of the particulate filter 60. The SCR device 40 is configured to convert nitrogen oxides, also referred to as NOx, with the aid of a SCR catalyst coating, into diatomic nitrogen, N2, and water. The HASC device 50 is configured to reduce emissions by ammonia oxidation and NOx conversion, as will be described with reference to Fig. 2. The EATS 20 typically comprise further components such as e.g. piping and may also comprise additional emission reducing components (not shown in Fig. 1). Although the emission reducing modules 30 are herein illustrated as separate modules, it is possible to combine two devices in a single module, such as by providing an integrated module comprising a HASC device and particulate filter.

Fig. 2 illustrates the engine system 10 in further detail. Thus, the engine system 10 comprises the hydrogen combustion engine 15 and the EATS 20 described briefly with reference to Fig. 1. The engine exhaust entering the EATS is in the following referred to as exhaust gases.

The EATS 20 comprises an exhaust gas inlet 22 arranged to receive exhaust gases from an engine outlet 17 of the hydrogen combustion engine 15. An EATS outlet 24 is arranged for discharging at least partly cleaned exhaust gases from the EATS 20, and an exhaust flow path 26 for transporting the exhaust gases from the exhaust gas inlet 22 to the EATS outlet 24. The EATS outlet 24 may e.g. be connected to, or comprise, the tailpipe of the vehicle 1. The EATS 20 further comprises a plurality of emission reducing modules arranged downstream of the exhaust gas inlet 22 in a direction of flow D indicated by the dash-dotted arrow. The emission reducing modules include the SCR device 40, the HASC device 50 and the particulate filter 60 briefly described with reference to Fig. 1. The emission reducing modules are configured to reduce emissions of the engine exhausts along the exhaust flow path 26.

The SCR device 40 may comprise an SCR catalyst coating, such as a metal-zeolite coating, e.g. Cu-zeolite or Fe-zeolite. In other examples, the SCR device 40 may comprise a vanadium oxide coating. The SCR device 40 is designed to convert NOx with the aid of the SCR catalyst coating into diatomic nitrogen, N2, and water. The SCR device 40 may typically comprise a substrate, e.g. a ceramic monolith, onto which the SCR catalyst coating is arranged. Alternatively, the SCR device 40 may comprise an extruded vanadia-based monolith.

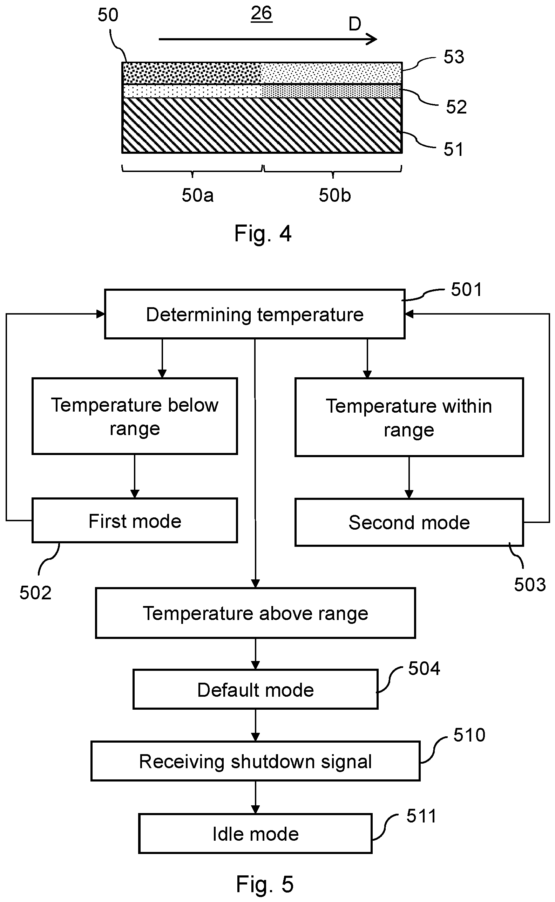

The HASC device 50 comprises an oxidation catalyst coating and a metal-zeolite coating provided on a substrate. A loading of the metal-zeolite coating decreases along a direction of flow D within the exhaust flow path 26, as will be further discussed with reference to Fig. 4 below. The HASC device 50 is designed to convert ammonia to NOx with the aid of the oxidation catalyst coating, and to convert NOx to N2 with the aid of the metal-zeolite. The HASC device 50 typically comprises a substrate, e.g. a ceramic monolith, such as cordierite, onto which the oxidation catalyst coating and the metal-zeolite coating are arranged, as will be further discussed with reference to Fig. 4 below.

The particulate filter 60 is configured to remove particles, e.g. particulate emissions or soot, from the exhaust gases. The particulate filter 60 is arranged downstream of the HASC device 50. Particulate emissions, such as e.g. metal oxides, sulfur containing emissions, and urea particles, are hence filtered from the exhaust gases downstream of the HASC device 50. As a result of the position downstream of the HASC device 50, the particulate filter 60 further prevents moisture from ambient air from reaching the HASC device 50 via the EATS outlet 24 during downtime of the engine 15.

In case an integrated module comprising both a particulate filter and a HASC device is provided instead of two separate modules, inlet channels of the particulate filter may be provided with a first portion coating of the oxidation catalyst coating and the metal-zeolite coating, and outlet channels may be provided with a second portion coating of the oxidation catalyst coating and the metal-zeolite coating.

In order to provide ammonia to the SCR device 40, the EATS 20 comprises a reductant injector 34 configured to inject reductant to the exhaust flow path 26 upstream of the SCR device 40, and downstream of the exhaust gas inlet 22. The reductant may e.g. be urea. During operation of the EATS 20, the injected reductant (or the resulting ammonia) is transported to the SCR device 40 by means of the exhaust gases, and is reacted onto the SCR catalyst coating. Reductant, or ammonia, which passes the SCR device 40 unreacted is handled in the HASC device 50 as previously described.

In the example illustrated in Fig. 2, the EATS 20 further comprises an optional hydrogen injector 36 arranged between the SCR device 40 and the HASC device 50. The hydrogen injector 36 is configured to inject H2 into the exhaust flow path 26 upstream of the HASC device 50. The injected H2 may be used as a reductant for NOx conversion within the HASC device 50 during cold start of the engine 15. In alternative examples of the EATS according to the disclosure, the hydrogen injector may be omitted as will be further described below. In yet other examples, the hydrogen injector may be provided further upstream in the EATS, such as upstream of the SCR device.

The EATS 20 may further comprise means for providing determination and/or measurement of various parameters, such as e.g. the temperature of the SCR device 40 and/or of the HASC device 50 by means of temperature sensors 33, 35. Moreover, although not illustrated, the amount of NOx may be determined/measured at the EATS outlet 24 by means of a NOx sensor, and/or a first hydrogen sensor may be arranged at the engine outlet 17 for measuring the amount of H₂ in the engine exhausts, and/or a second hydrogen sensor may be arranged upstream of the HASC device 50 for measuring the amount of H₂ in the exhaust gases entering the HASC device 50. In the embodiment of Fig. 2, a first temperature sensor 33 is arranged to directly measure the temperature of the SCR device 40, and a second temperature sensor 35 is arranged to directly measure the temperature of the HASC device 50. Note, however, that the temperature of the SCR device 40 may be determined by an estimation using at least one temperature sensor arranged upstream and/or downstream of the SCR device 40, and/or that the temperature of the HASC device 50 may be determined by an estimation using at least one temperature sensor arranged upstream and/or downstream of the HASC device 50, e.g. a temperature sensor arranged at the EATS outlet 24. The operation of the hydrogen combustion engine system 10 may as previously described, and as indicated by the dashed arrows, be controlled by a control unit 18.

FIG. 3 schematically shows an engine cylinder (or combustion cylinder) 310, housing a piston 312, of the hydrogen combustion engine 15. Typically, a plurality of such engine cylinders and corresponding pistons is comprised in the hydrogen combustion engine 15. In more detail, the piston 312 is configured for reciprocal movement within the engine cylinder 310, wherein a combustion chamber 314 is comprised in the engine cylinder 310 above the piston 312. The hydrogen combustion engine 15 further comprising a spark plug 309 arranged in the combustion chamber 314. The piston 312 may be a dual acting piston in which the engine cylinder 310 is a combustion cylinder, and the hydrogen combustion engine 15 further comprises a compressor cylinder (not shown).

The hydrogen combustion engine 15 comprises an air intake passage 315 being arranged downstream of e.g. an air chamber fluidly connected to a compressor (not shown). Air, or compressed air, is fed to the combustion chamber 314 via the intake passage 315, and is regulated by an intake valve 316. Moreover, the hydrogen combustion engine 15 comprises an exhaust passage 317 regulated by an exhaust valve 318.

As can be seen in Fig. 3, the hydrogen combustion engine 15 comprises an injection system 420 comprising a fuel injector 403 configured to supply H2 (typically as a gaseous fuel) to the combustion chamber 314. The fuel injector 403 is fluidly connected to at least one H2 storage tank 405 comprising pressurized H2 fuel or a hydrogen-based gas (or a fuel which easily can conform to form hydrogen). The injection system 420 may further comprise a water inlet arrangement 404 configured for supplying a water-based fluid medium 404a to the combustion chamber 314.

The hydrogen combustion engine 15 may be operated according to an Otto cycle or another four stroke combustion mode. The four stroke cycle of the hydrogen combustion engine thus comprises four distinct piston strokes within the engine cylinder 310 to complete one operating cycle: intake of air or compressed air via the air intake passage 315 and the intake vale 316 as the piston 312 moves reciprocally away from TDC, compression as the piston 312 moves reciprocally towards TDC, power or combustion as the H2 fuel is combusted using the spark plug 309, and exhaust in which the engine exhausts leaves the combustion chamber 314 via the exhaust passage 317 and the exhaust valve 318.

FIG. 4 schematically illustrates a portion of a HASC device 50 according to an example of the present disclosure. The illustrated HASC device 50 comprises a first half 50a and a second half 50b, wherein the second half 50b is arranged downstream of the first half 50a in the direction of flow D of exhaust gases within the exhaust flow path 26. The HASC device 50 comprises a substrate 51 on which an oxidation catalyst coating 52 and a metal-zeolite coating 53 are arranged. The substrate 51 may be a ceramic monolithic substrate, such as a cordierite substrate having a honeycomb configuration. The oxidation catalyst coating 52 may, by way of example, comprise particles of a noble metal. Preferably, the oxidation catalyst coating 52 comprises Pt particles. In some examples, it may comprise Pd particles. It may be coated directly on the substrate 51. The metal-zeolite coating 53 comprises a metal ion- exchanged zeolite, comprising a transition metal such as copper (Cu) or iron (Fe). It is porous and may be coated on top of the oxidation catalyst coating 52.

The metal-zeolite coating 53 may be configured to provide an average water adsorption capacity of 50 to 60 g of water per kg of the HASC device mass. The amount of metal-zeolite in the HASC device 50 should preferably be sufficient to adsorb an amount of water leading to a temperature increase to a light-off temperature for H2 oxidation, approximately 110-120°C, within the HASC device 50 during engine start-up. However, a loading of the metal-zeolite coating 53, in terms of mass per substrate volume or mass per surface area of the substrate 51, decreases along the direction of flow D such that the water adsorption capacity of the metal-zeolite coating 53 also decreases in the direction of flow D. In other words, a thicker and/or denser metal-zeolite coating 53 may be provided in at least a part of the first half 50a of the HASC device 50 than in at least a part of the second half 50b. For example, the metal-zeolite coating 53 within the first half 50a of the HASC device 50 may be configured to provide a total water adsorption capacity within the first half 50a which is at least 1.5 times a total water adsorption capacity within the second half 50b, preferably at least 1.7 times, more preferably at least 1.8 times. In some examples, the total water adsorption capacity within the first half 50a may be twice, or approximately twice, the water adsorption capacity within the second half 50b. The loading of the metal-zeolite coating 53 may decrease gradually or stepwise in the direction of flow D. For example, the HASC device 50 may be divided into two, three, four or five portions along the direction of flow D, each portion having a reduced loading of the metal-zeolite coating 53 in comparison with the preceding portion. The portions may have equal lengths, or they may be of different lengths as measured in the direction of flow D. For example, when the HASC device 50 is divided into two portions, a first portion comprising a higher loading of the metal-zeolite coating 53 may be of a shorter length than a second portion comprising a lower loading. The first portion may, e.g., have a length corresponding to 10-40% of a total length of the HASC device 50. In the first portion, the metal-zeolite coating 53 may be configured to achieve water adsorption with a mass ratio of 1:8-1:10 (ratio of mass of water adsorbed to the dry mass of the HASC device 50), preferably 2:17 - 2:19, more preferably 1:9, and in the second portion, the metal-zeolite coating 53 may be configured to achieve water adsorption with the mass ratio of 1:16-1:20, preferably 1:17-1:19, more preferably 1:18.

In contrast, the loading of the oxidation catalyst coating 52 may increase in the direction of flow D, either gradually or stepwise. For example, the first half 50a of the HASC device 50 may contain a total first amount of the oxidation catalyst coating 52 and the second half 50b of the HASC device 50 may contain a total second amount of the oxidation catalyst coating 52. The first amount may, by way of example, be 25-75% of the second amount, preferably 40-60%. As also described above, the HASC device 50 may comprise two, three, four or five portions along the direction of flow D. Each portion may contain an increased loading of the oxidation catalyst coating 52 in comparison with the preceding portion.

In a non-illustrated example embodiment in which the HASC device and the particulate filter is integrated in a single module, a first part of the oxidation catalyst coating and the metal-zeolite coating may be coated on inlet channel walls of the integrated module, and a second part of the oxidation catalyst coating and the metal-zeolite coating may be coated on the outlet channel walls. The coating may be gradually applied such that the first part is thickest at the inlet and gradually decreases in the direction of flow, and such that the second part is thickest at the outlet and gradually decreases toward the inlet.

Fig. 5 illustrates a method of controlling operation of a hydrogen combustion engine system 10, such as the engine system 10 illustrated in Fig. 2, in connection with starting of the engine 15, in particular in connection with cold start. The method may, by way of example, be carried out by process circuitry included in the control unit 18. It comprises the following actions:

Action 501: Determining a temperature of the HASC device 50. The temperature may be determined by receiving a measurement value from the second temperature sensor 35. In other examples, it may be estimated based on a measured temperature at another location within the EATS 20 and a model of the EATS 20. The determined temperature may correspond to a temperature at an exhaust outlet 56 of the HASC device 50. The temperature of the HASC device 50 may be monitored repeatedly or continually during operation of the engine system 10 such that various actions may be taken depending on the determined temperature as further described below.

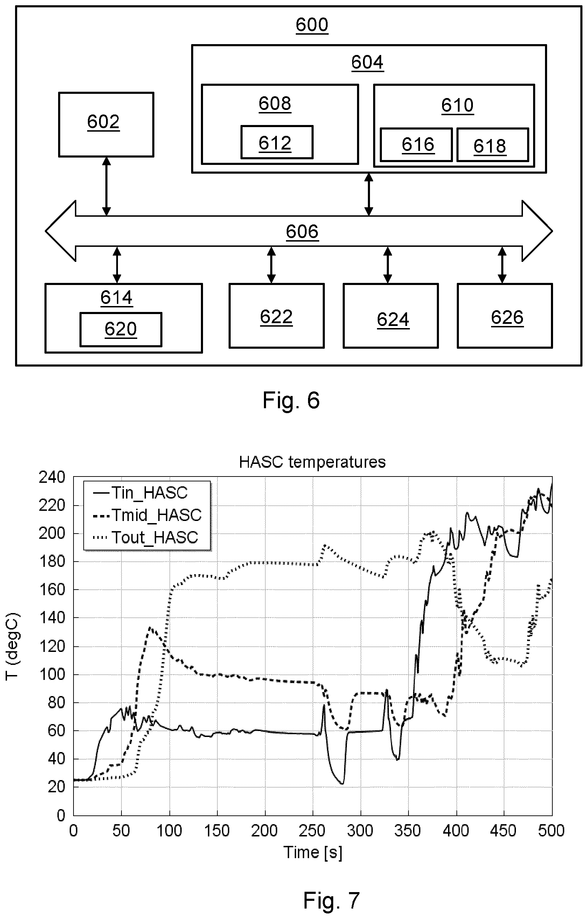

Action 502: In response to determining that the temperature of the HASC device 50 is below a first HASC temperature range, instructing the engine system 10 to operate in a first operating mode defined by an amount of water in the engine out exhaust gases being at least 10 mol%, such as up to 20 or 25 mol%. The first operating mode may also be denoted a low-NOx mode. In this first operating mode, a relatively high water concentration is achieved by by retarded ignition timing, post injection of H2 during a power stroke of the engine cylinder 310, and a relatively high fuelling. The post injected H2 should in the first operating mode burn to provide engine power and an increased amount of water in the exhaust gases. During operation in the first operating mode, water from the exhaust gases is adsorbed on the metal-zeolite coating of the HASC device 50, resulting in a rapid temperature increase of the HASC device 50. A time-varying temperature gradient along the direction of flow D will develop in the HASC device 50, with a temperature peak at approximately mid-length of the HASC device. As operation in the first operating mode proceeds, the temperature may typically increase to about 65°C at an inlet 55 of the HASC device 50, up to 125°C at mid-length, and about 80°C at the outlet 56. To ensure that the H2 oxidation light-off temperature of 110-120°C is reached within the first half 50a of the HASC device 50, the first HASC temperature range may have a lower endpoint below 100°C, such as in the range of 70-90°C, when the determined temperature corresponds to the temperature at the exhaust outlet 56 of the HASC device 50. The lower endpoint may typically be reached within less than 100 seconds as illustrated in FIG. 7, showing a simulation of temperature development at the inlet 55 (Tin_HASC, solid line), the mid-point (Tmid_HASC, dashed line), and the outlet 56 (Tout_HASC, dotted line) of the HASC device 50 over time.

Action 503: In response to determining that the temperature of the HASC device 50 is within the first HASC temperature range and has not yet reached an upper endpoint thereof, instructing the engine system 10 to operate in a second operating mode defined by an amount of unburnt hydrogen in the exhaust gases at the inlet 55 of the HASC device 50 being at least 0.3 mol%, preferably at least 0.5 mol%, or more preferably at least 0.8 mol%. The amount of unburnt hydrogen may preferably be less than 3 mol%, such less than 2 mol%. The amount of unburnt hydrogen may, in at least one preferred example, be 1 mol% or about 1 mol%. The first HASC temperature range may have an upper endpoint of 180-220°C, preferably 190-210°C, when the determined temperature corresponds to the temperature at the exhaust outlet 56 of the HASC device 50. Hence, once the temperature exceeds the lower endpoint of the first HASC temperature range, H2 injection using the hydrogen injector 36 may be initiated and it may continue until the upper endpoint is reached, after which it is ceased, regardless of whether the temperature temporarily drops again. The instructing of the engine system 10 to operate in the second operating mode may hence comprise instructing the H2 injector 36 to inject a controlled amount of H₂ into the exhaust flow path 26 at a location between the engine exhaust valve 17 and the HASC device 50. Alternatively, or additionally, the instructing of the engine system 10 to operate in the second operating mode may comprise instructing at least one fuel injector 403 of the engine 15 to inject a controlled amount of H2 into the combustion chamber 314 of at least one engine cylinder 310 during the exhaust stroke. The increased temperature caused by the water adsorption will enable the added H2 to be oxidised and release heat to further increase and maintain the temperature within the HASC device 50. At temperatures below 250°C, the oxidation of H₂ will also enable the reduction of NOx by H2. When the metal-zeolite becomes saturated with water, there is a risk that cool exhaust gases from the SCR device 40 will quench the H2 oxidation and hence the HASC device 50 may be cooled down from the inlet side, i.e., from the inlet 55. However, during the quenching at the inlet side, the water and hydrogen keeps warming the downstream portions of the HASC device 50. During the operation in the second operating mode, the temperature gradient within the HASC device 50 will therefore typically develop such that the temperature at the mid-length decreases while the temperature at the outlet 56 increases as shown in Fig. 7.

The method may also comprise an optional action 504 carried out by the processing circuitry in response to determining, in the action 501, that the temperature of the HASC device 50 has increased above the first HASC temperature range. The action 504 comprises instructing the engine system 10 to operate in a default operating mode in which reductant is injected by the reductant injector 34 and in which the SCR device 40 is active. In the default operating mode, H2 injection during the exhaust stroke and/or by the H2 injector 36 is ceased. The HASC device 50 now acts as an ammonia slip catalyst that takes care of residual ammonia by conversion to N2. Any unreacted hydrogen is also handled as described above.

A method for controlling operation of the engine system 10 in connection with shutdown of the engine 15 is illustrated as actions 510 and 511 in Fig. 5. In the action 510, a signal indicating shutdown of the engine 15 is received in the control unit 18, such as from a driver or from another on-board or off-board control unit. The action 511 is carried out in response to receiving the signal indicating shutdown of the engine 15 and comprises instructing the engine system 10 to operate in an idle mode with a lambda value of at least 3.5 until an end condition is fulfilled. This may for example be achieved by partial cylinder deactivation, in which fuel is only injected into some of the engine cylinders 310. The end condition may, by way of example, be considered fulfilled once a predetermined time has elapsed, or after a predetermined number of cycles, or when a humidity of the exhaust gases is lower than a threshold. The operation in the idle mode will dry out the EATS 20 and reduce humidity in the HASC device 50, preparing it for water adsorption in connection with the next cold start of the engine 15.

FIG. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or j ointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device
interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In the following, a list of numbered examples of the disclosure is presented.

Example 1: An exhaust aftertreatment system (20) arranged in an exhaust flow path (26) of a hydrogen combustion engine (15), comprising:
a selective catalytic reduction, SCR, device (40) configured to reduce nitrogen oxides;
a hydrogen and ammonia slip catalyst, HASC, device (50) arranged downstream of the SCR device (40) in the exhaust flow path (26), the HASC device (50) comprising an oxidation catalyst coating (52) and a metal-zeolite coating (53) provided on a substrate (51), wherein a loading of the metal-zeolite coating (53) decreases along a direction of flow (D) within the exhaust flow path (26); and
a particulate filter (60) arranged downstream of the HASC device (50) in the exhaust flow path (26).

Example 2: The exhaust aftertreatment system of example 1, wherein the metal-zeolite coating (53) is configured to provide an average water adsorption capacity of 50 to 60 g of water per kg of the HASC device mass.

Example 3. The exhaust aftertreatment system of example 1 or 2, wherein an amount of metal-zeolite in the HASC device (50) is sufficient to adsorb an amount of water leading to a temperature increase to a light-off temperature for H2 oxidation within the HASC device (50) during engine start-up.

Example 4. The exhaust aftertreatment system of any one of the preceding examples, wherein the metal-zeolite coating (53) within a first half (50a) of the HASC device (50) is configured to provide a total water adsorption capacity within the first half of the HASC device (50) which is at least 1.5 times a total water adsorption capacity within the second half of the HASC device (50), preferably at least 1.7 times, more preferably at least 1.8 times, such as twice or approximately twice the water adsorption capacity within the second half of the HASC device (50).

Example 5. The exhaust aftertreatment system of any one of the preceding examples, wherein the metal-zeolite coating (53) is arranged on top of the oxidation catalyst coating (52) on the substrate (51).

Example 6. The exhaust aftertreatment system of any one of the preceding examples, wherein a loading of the oxidation catalyst coating (52) within the HASC device (50) is increasing along a direction of flow within the exhaust flow path (26).

Example 7. The exhaust aftertreatment system of any one of the preceding examples, wherein a first half (50a) of the HASC device (50) contains a first amount of the oxidation catalyst coating (52) and a second half (50b) of the HASC device (50), downstream of the first half (50a), contains a second amount of the oxidation catalyst coating (52), the first amount being 25-75% of the second amount, preferably 40-60%.

Example 8. The exhaust aftertreatment system of any one of the preceding examples, further comprising a hydrogen injector (36) configured to inject H2 into the exhaust flow path (26), the hydrogen injector (36) being arranged upstream of the HASC device (50).

Example 9. An engine system (10) for a vehicle (1), comprising:
a hydrogen combustion engine (15);
an exhaust aftertreatment system (20) of any one of the preceding examples arranged in an exhaust flow path (26) of the engine (15).

Example 10. A computer-implemented method for controlling operation of the engine system (10) of example 9 in connection with starting of the engine (15), the method comprising:
determining (501), by processing circuitry (18, 602) of a computer system (600), a temperature of the HASC device (50);
in response to determining that the temperature of the HASC device (50) is below a first HASC temperature range, instructing (502), by the processing device (602), the engine system (10) to operate in a first operating mode defined by an amount of water in the engine out exhaust gases being at least 10 mol%, during which water is adsorbed on the metal-zeolite coating of the HASC device (50); and
in response to determining that the temperature of the HASC device (50) is within the first HASC temperature range and has not yet reached an upper endpoint thereof, instructing (503), by the processing circuitry (602), the engine system (10) to operate in a second operating mode defined by an amount of unburnt hydrogen in the exhaust gases at an inlet of the HASC device (50) being at least 0.3 mol%.

Example 11. The method of example 10, wherein the determined temperature of the HASC device (50) corresponds to the temperature at an outlet of the HASC device (50), and wherein the first HASC temperature range has a lower endpoint below 100°C, such as in the range of 70-90°C.

Example 12. The method of example 10 or 11, wherein the determined temperature of the HASC device (50) corresponds to the temperature at an outlet of the HASC device (50), and wherein the first HASC temperature range has an upper endpoint of 180-220°C, preferably 190-210°C.

Example 13. The method of any one of examples 10-12, wherein the instructing of the engine system (10) to operate in the second operating mode comprises instructing at least one fuel injector (403) of the engine (15) to inject H2 into at least one engine cylinder (310) during an exhaust stroke, and/or instructing an H2 injector (36) to inject H2 into the exhaust flow path (26) at a location between an engine exhaust valve (17) and the HASC device (50).

Example 14. A computer-implemented method for controlling operation of the engine system (10) of example 9 in connection with shutdown of the engine (15), the method comprising:
in response to receiving, by processing circuitry (602) of a computer system (600), a signal indicating shutdown of the engine (15), instructing, by the processing circuitry (602), the engine system (10) to operate in an idle mode with a lambda value of at least 3.5 until an end condition is fulfilled.

Example 15. A computer system (600) for controlling operation of the engine system (10) of example 9 in connection with starting of the engine (15), the computer system (600) comprising processing circuitry (18, 602) configured to:
determine a temperature of the HASC device (50);
in response to determining that the temperature of the HASC device (50) is below a first HASC temperature range, instruct the engine system (10) to operate in a first operating mode during which water is adsorbed on the metal-zeolite coating (53) of the HASC device (50); and
in response to determining that the temperature of the HASC device (50) is within the first HASC temperature range, instruct the engine system (10) to operate in a second operating mode defined by an amount of unburnt hydrogen in the exhaust gases at an inlet of the HASC device (50) being at least 0.3 mol%.

Example 16. The computer system of example 15, wherein the determined temperature of the HASC device (50) corresponds to the temperature at an outlet of the HASC device (50), and wherein the first HASC temperature range has a lower endpoint below 100°C, such as in the range of 70-90°C.

Example 17. The computer system of example 15 or 16, wherein the determined temperature of the HASC device (50) corresponds to the temperature at an outlet of the HASC device (50), and wherein the first HASC temperature range has an upper endpoint of 180-220°C, preferably 190-210°C.

Example 18. The computer system of any one of examples 15-17, wherein the processing circuitry (602) is configured to instruct the engine system (10) to operate in the second operating mode by instructing at least one fuel injector of the engine (15) to inject H2 into at least one engine cylinder (310) during an exhaust stroke, and/or instructing an H2 injector (36) to inject H2 into the exhaust flow path at a location between an engine exhaust valve (17) and the HASC device (50).

Example 19. A vehicle (1) comprising the engine system (10) of example 9.

Example 20. A computer program product comprising program code for performing, when executed by the processing circuitry, the method of any of examples 10-14.

Example 21. A non-transitory computer-readable storage medium comprising instructions, which when executed by the processing circuitry, cause the processing circuitry to perform the method of any of examples 10-14.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An exhaust aftertreatment system (20) arranged in an exhaust flow path (26) of a hydrogen combustion engine (15), comprising:
a selective catalytic reduction, SCR, device (40) configured to reduce nitrogen oxides;
a hydrogen and ammonia slip catalyst, HASC, device (50) arranged downstream of the SCR device (40) in the exhaust flow path (26), the HASC device (50) comprising an oxidation catalyst coating (52) and a metal-zeolite coating (53) provided on a substrate (51), wherein a loading of the metal-zeolite coating (53) decreases along a direction of flow (D) within the exhaust flow path (26); and
a particulate filter (60) arranged downstream of the HASC device (50) in the exhaust flow path (26).

2. The exhaust aftertreatment system of claim 1, wherein the metal-zeolite coating (53) is configured to provide an average water adsorption capacity of 50 to 60 g of water per kg of the HASC device mass.

3. The exhaust aftertreatment system of claim 1 or 2, wherein an amount of metal-zeolite in the HASC device (50) is sufficient to adsorb an amount of water leading to a temperature increase to a light-off temperature for H2 oxidation within the HASC device (50) during engine start-up.

4. The exhaust aftertreatment system of any one of the preceding claims, wherein the metal-zeolite coating (53) within a first half (50a) of the HASC device (50) is configured to provide a total water adsorption capacity within the first half of the HASC device (50) which is at least 1.5 times a total water adsorption capacity within the second half of the HASC device (50), preferably at least 1.7 times, more preferably at least 1.8 times, such as twice or approximately twice the water adsorption capacity within the second half of the HASC device (50).

5. The exhaust aftertreatment system of any one of the preceding claims, wherein a loading of the oxidation catalyst coating (52) within the HASC device (50) is increasing along a direction of flow within the exhaust flow path (26).

6. The exhaust aftertreatment system of any one of the preceding claims, wherein a first half (50a) of the HASC device (50) contains a first amount of the oxidation catalyst coating (52) and a second half (50b) of the HASC device (50), downstream of the first half (50a), contains a second amount of the oxidation catalyst coating (52), the first amount being 25-75% of the second amount, preferably 40-60%.

7. The exhaust aftertreatment system of any one of the preceding claims, further comprising a hydrogen injector (36) configured to inject H2 into the exhaust flow path (26), the hydrogen injector (36) being arranged upstream of the HASC device (50).

8. An engine system (10) for a vehicle (1), comprising:
a hydrogen combustion engine (15);
an exhaust aftertreatment system (20) of any one of the preceding claims arranged in an exhaust flow path (26) of the engine (15).

9. A computer-implemented method for controlling operation of the engine system (10) of claim 8 in connection with starting of the engine (15), the method comprising:
determining (501), by processing circuitry (18, 602) of a computer system (600), a temperature of the HASC device (50);
in response to determining that the temperature of the HASC device (50) is below a first HASC temperature range, instructing (502), by the processing device (602), the engine system (10) to operate in a first operating mode defined by an amount of water in the engine out exhaust gases being at least 10 mol%, during which water is adsorbed on the metal-zeolite coating of the HASC device (50); and
in response to determining that the temperature of the HASC device (50) is within the first HASC temperature range and has not yet reached an upper endpoint thereof, instructing (503), by the processing circuitry (602), the engine system (10) to operate in a second operating mode defined by an amount of unburnt hydrogen in the exhaust gases at an inlet of the HASC device (50) being at least 0.3 mol%.

10. The method of claim 9, wherein the determined temperature of the HASC device (50) corresponds to the temperature at an outlet of the HASC device (50), and wherein the first HASC temperature range has a lower endpoint below 100°C, such as in the range of 70-90°C, and an upper endpoint of 180-220°C, preferably 190-210°C.

11. The method of any one of claims 9-10, wherein the instructing of the engine system (10) to operate in the second operating mode comprises instructing at least one fuel injector (403) of the engine (15) to inject H2 into at least one engine cylinder (310) during an exhaust stroke, and/or instructing an H2 injector (36) to inject H2 into the exhaust flow path (26) at a location between an engine exhaust valve (17) and the HASC device (50).

12. A computer system (600) for controlling operation of the engine system (10) of claim 8 in connection with starting of the engine (15), the computer system (600) comprising processing circuitry (18, 602) configured to:
determine a temperature of the HASC device (50);
in response to determining that the temperature of the HASC device (50) is below a first HASC temperature range, instruct the engine system (10) to operate in a first operating mode during which water is adsorbed on the metal-zeolite coating (53) of the HASC device (50); and
in response to determining that the temperature of the HASC device (50) is within the first HASC temperature range, instruct the engine system (10) to operate in a second operating mode defined by an amount of unburnt hydrogen in the exhaust gases at an inlet of the HASC device (50) being at least 0.3 mol%.

13. A vehicle (1) comprising the engine system (10) of claim 9.

14. A computer program product comprising program code for performing, when executed by the processing circuitry, the method of any of claims 9-11.

15. A non-transitory computer-readable storage medium comprising instructions, which when executed by the processing circuitry, cause the processing circuitry to perform the method of any of claims 9-11.
